# FASCICULE DE BREVET EUROPEEN

(11) **EP 2 458 236 B1**
(45) Date de publication et mention de la délivrance du brevet: **24.12.2014**
(21) Numéro de dépôt: 11380094.0
(22) Date de dépôt: 21.11.2011
(51) Int. Cl.: F16C 23/08

(54) **Système pour l'application de charges de flexion sur un axe rotatif**
System zum Aufbringen von Biegungsbelastungen auf eine Drehachse
System for applying flexural loads to a rotary shaft

(30) Priorité: 26.11.2010 ES 201031738
(43) Date de publication de la demande: 30.05.2012
(73) Titulaire: Fundación Centro de Tecnologias Aeronáuticas, 01510 Miñano Alava (ES)
(72) Inventeur: Manquique Cantera, Nerea, 01510 Miñano Alava (ES); Neve Lete, Mikel, 01510 Miñano Alava (ES); Madruga Angulo, Oscar, 01510 Miñano Alava (ES); Jorge Aldave, Lagoba, 01510 Miñano Alava (ES); Piñán Alonso, Javier, 01510 Miñano Alava (ES); Sáez de Ocariz Granja, Idurre, 01510 Miñano Alava (ES); Eiriz Gervás, Ignacio, 01510 Miñano Alava (ES)
(74) Mandataire: Carvajal y Urquijo, Isabel

(56) Documents cités:
- DE-A1- 10 319 104
- JP-A- 2009 250 679
- US-A- 4 586 457

## Description

L'objet de l'invention se rapporte à un système pour l'application de charges de flexion dans un axe rotatif, applicable de préférence dans des essais de caractérisation de matériaux, des essais sur des composants d'aérogénérateurs, dans l'aéronautique et l'automobile.

Dans ce type d'essais, on introduit une charge dans l'extrémité d'un axe en saillie et giratoire. Le mécanisme doit être capable de transmettre la charge et d'absorber la déformation de la tige. Pour cela, une union avec deux degrés de liberté est nécessaire : celui du virement de l'axe et celui de la déformation due à la flexion de ce dernier. Le document JP 2009 250679 A divulgue l'application de charges de flexion à force verticale avec un masse.

Dans l'actuel état de la technique, la manière d'appliquer une charge dans un axe avec plus d'un degré de liberté consistait en des unions sphériques, communément appelées rotules. Cet élément se compose d'un anneau mobile inséré dans une couronne, la surface de contact entre eux étant sphérique et recouverte d'un matériau à faible friction. L'axe est relié dans un orifice cylindrique qui traverse l'anneau central.

Les limitations des rotules conventionnelles se caractérisent par le fait que, sous de grandes charges et à des hautes vitesses de rotation, le matériau antifriction se dégrade rapidement, la pièce devenant donc inutilisable.

Le système objet de l'invention permet de résoudre ce problème et recouvre un ample rang de charges, de vitesses de rotation et de diamètres de l'axe. Il est caractérisé par le fait qu'il se compose d'un actionneur hydraulique, d'une cellule de charge, d'une fourche avec deux rotules et d'un corps central avec deux roulements à rouleaux coniques et, selon ce dernier, l'actionneur hydraulique introduit la charge ; la cellule de charge est unie à la tige de l'actionneur hydraulique ; la fourche est unie à la cellule de charge et divise la force de l'actionneur hydraulique sur deux bras, en la transmettant aux deux rotules, lesquelles absorberont la déformation de l'axe principal au moment où celui-ci fléchira. Ces rotules sont montées dans les deux axes de virement qui dépassent du corps central, par lequel est transmise la charge provenant des rotules jusqu'aux deux roulements, qui sont insérés dans le corps central et acceptent une valeur de charge et une vitesse de rotation de l'axe principal élevées.

Avec cette structuration, l'axe principal giratoire, monté dans le corps central, fléchit étant donné la charge qui arrive à travers la chaîne de charge formée par l'actionneur hydraulique/cellule de charge/fourche; et la conjonction de roulements/rotules élimine l'apparition de moments de flexion, de sorte que les dispositifs se trouvent sous une charge de traction-compression pure.

Les avantages de l'invention par rapport aux solutions connues sont les suivants :- la présence de roulements permet d'obtenir une valeur de charge et une vitesse de rotation de l'axe principal élevées; - l'ensemble roulements et rotules élimine l'apparition de moments de flexion dans la chaîne de charge actionneur-cellule de charge. De cette façon, les dispositifs se trouvent dans des conditions de travail optimales, c'est-à-dire une charge pure de traction-compression.

Pour cette raison, le contenu de la présente demande constitue une invention nouvelle impliquant une activité inventive, pouvant être appliqué dans le secteur industriel.

Pour comprendre mieux l'objet de la présente invention, une forme préférentielle de réalisation pratique est représentée sur les plans, laquelle peut présenter des changements accessoires ne dénaturant pas son fondement.

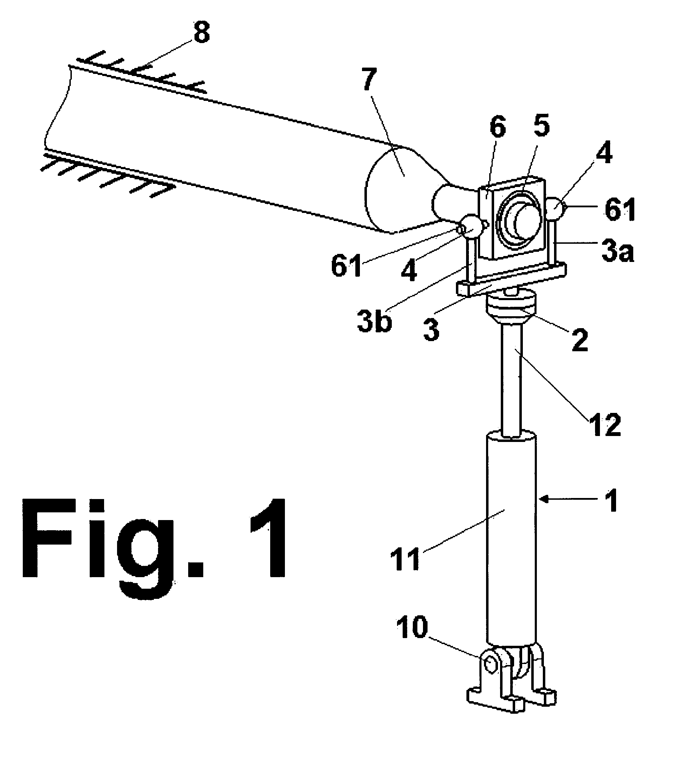

La figure 1 est une vue schématique en perspective d'une réalisation pratique du système objet de l'invention.
La figure 2 est une coupe agrandie du corps central (6) avec les roulements (5) insérés dans ce dernier. L'axe rotatif (7) et la fourche (3) sont aussi représentés de manière schématique.

Ci-dessous est décrit un exemple de réalisation pratique, non limitatif, de la présente invention.

Conformément à l'invention, le système pour l'application de charges de flexion dans un axe rotatif, inclut principalement, en accord avec l'invention, les composants et particularités suivantes:
1.- actionneur hydraulique
2.- cellule de charge
3.- fourche
4.- rotules
5.- roulements
6.- corps central
7.- axe rotatif

Les moyens pour obtenir le virement de l'axe principal (7) ainsi que son ancrage (8), opposé à l'application de la charge, ne font pas partie de l'objet de l'invention.

Conformément à l'invention, et selon la réalisation représentée, l'actionneur hydraulique (1) est disposé à la verticale sur un sol technique (non représenté), avec une rotule (10) sur sa base, de sorte que son corps (11) puisse basculer par rapport à ce sol technique.

Cet actionneur hydraulique (1) est conçu pour appliquer des charges, tant de traction que de compression, dans la direction longitudinale à l'axe de son corps (11), en transformant la pression hydraulique de ses chambres en force à la fin de sa tige/piston (12).

Dans l'extrémité de cette tige/piston (12) est reliée la cellule de charge (2) ; cette cellule de charge (2) étant sous monitorage.

La cellule de charge (2) sous monitorage est jointe à la fourche (3), qui divise la charge symétriquement entre ses deux bras (3a), (3b), qui finissent dans les deux rotules (4). Ces rotules (4) ne sont pas plus détaillées car il s'agit d'éléments commerciaux pour unions sphériques.

Cette chaîne de charge, à son tour, est unie en pivotement au corps central (6) au moyen de deux axes (61) qui dépassent de ce dernier. Les deux axes (61) sont coaxiaux et, en les insérant dans les rotules (4), le seul degré de liberté permis est la rotation autour de ces derniers. Cette rotation sera un mouvement oscillatoire, à basse vitesse angulaire, provoqué par la flexion de l'axe principal (7) rotatoire.

Les dimensions des rotules (4) sont pensées pour supporter largement les cycles de charge prévus.

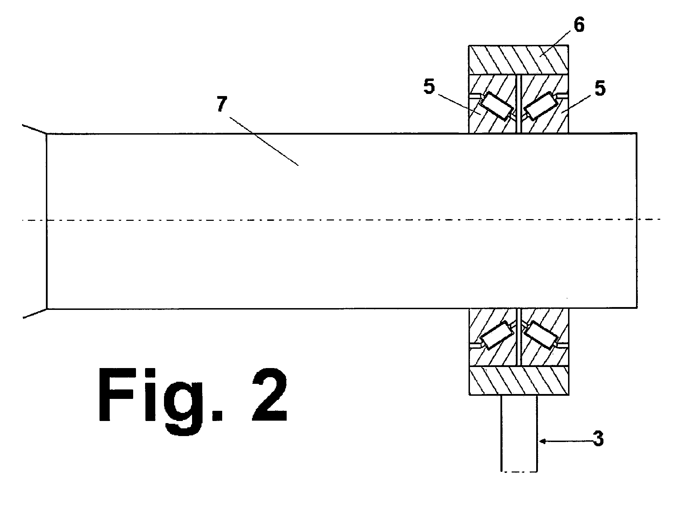

Dans l'exemple de réalisation représenté, le dit corps central (6) présente une structuration monopièce auquel l'on a ajouté un logement cylindrique et passant, du même diamètre que les roulements (5) qui sont insérés dans celui-ci. Voir figure 2.

Ces dimensions de ces roulements (5) sont pensées pour pouvoir supporter tant les charges radiales que les charges axiales, qui apparaîtront quand l'axe principal (7) fléchira et un virement du corps central se produira (6) autour de l'axe que forment les rotules (4).

Dans l'exemple de réalisation représenté, une paire de roulements à rouleaux coniques (5) a été prise en compte, étant donné l'ample rang de caractéristiques qu'ils recouvrent, la fiabilité, le coût économique et la facilité d'approvisionnement. La figure 2 présente une coupe de l'assemblage de ces roulements (5) entre le corps (6) et l'axe principal central (7).

La conception, tant de l'axe principal (7) que du corps central (6) devra prévoir une installation correcte des roulements (5) (non représentée sur la figure 2, puisqu'il s'agit d'une simplification illustrative). Le virement dans l'axe principal (7), ainsi que son ancrage (8) opposé à l'application de charge, font partie de systèmes externes non considérés dans l'objet de la présente invention.

Aux effets de l'invention, les éléments suivants, entre autres, sont indifférents et accessoires:
- Le type de matériau utilisé dans le corps central (6) bien que, concrètement, ce corps central (6) soit en acier;
- Le type de roulements (5) utilisés, bien que, concrètement, ces roulements (5) soient à roulements coniques.

Les matériaux, les dimensions, les proportions et, en général, tous les autres détails accessoires ou secondaires n'altérant pas, ni ne changeant ou ne modifiant pas les fondements essentiels proposés pourront être variables.

## Revendications

1. Système pour l'application de charges de flexion dans un axe rotatif, **caractérisé par le fait que**, selon ce dernier, l'on dispose:
a) un actionneur hydraulique (1), qui introduit la charge;
b) une cellule de charge (2) jointe à la tige (12) de l'actionneur hydraulique (1);
c) une fourche (3), jointe à la cellule de charge (2), qui divise la forcé de l'actionneur hydraulique (1) sur deux bras (3a), (3b) et la transmet à
d) deux rotules (4), qui absorbent la déformation d'un axe principal (7) quand celui-ci fléchit ; ces rotules (4) étant montées sur deux axes de virement (61) qui dépassent d'
e) un corps central (6), par lequel la charge provenant des rotules est transmise aux
f) deux roulements (5), qui sont insérés dans le corps central (6) et qui acceptent une valeur de charge et une vitesse de rotation de l'axe principal élevées;
de manière à ce que l'axe principal giratoire (7), monté dans ce corps central (6), fléchit étant donné la charge arrivant à travers la chaîne de charge formée par l'actionneur hydraulique (1)/cellule de charge (2)/fourche (3) et la conjonction de roulements (5)/rotules (4) élimine l'apparition de moments de flexion et les dispositifs se trouvant sous une charge pure de traction-compression.

2. Système pour l'application de charges de flexion dans un axe rotatif, selon la revendication 1, **caractérisé par le fait que**, concrètement, le corps central (6) est en acier.

3. Système pour l'application de charges de flexion dans un axe rotatif, selon la revendication 1, **caractérisé par le fait que**, concrètement, les roulements (5) sont à rouleaux coniques.

## Patentansprüche

1. System zum Aufbringen von Biegelasten auf eine Drehwelle, **dadurch gekennzeichnet, dass** es gemäß dem zuletzt genannten Folgendes aufweist:
a) einen Hydraulikaktor (1), welcher die Last einleitet;
b) eine Kraftzelle (2), welche mit der Stange (12) des Hydraulikaktors (1) verbunden ist;
c) eine Gabel (3), welche mit der Kraftzelle (2) verbunden ist, welche die Kraft des Hydraulikaktors (1) auf zwei Arme (3a), (3b) verteilt und an folgende Elemente überträgt:
d) zwei Kugelgelenke (4), welche die Verformung einer Hauptachse (7) aufnehmen wenn sich diese biegt; wobei diese Kugelgelenke (4) an zwei Übertragungswellen (61) montiert sind, welche folgende Elemente durchqueren:
e) einen zentralen Körper (6), durch welchen die von den Kugelgelenken stammende Last übertragen wird auf
f) zwei Lager (5), welche im zentralen Körper (6) eingesetzt sind, welche einen hohen Belastungswert und eine hohe Drehgeschwindigkeit in der Hauptwelle zulassen;
so dass sich die Hauptdrehwelle (7), welche an dem zentralen Körper (6) montiert ist, aufgrund der eingehenden Last durch die Lastkette, welche durch den Hydraulikaktor (1) / die Kraftzelle (2) / die Gabel (3) gebildet ist, biegt, und das Zusammentreffen der Lager (5) /Kugelgelenke (4) Biegemomente verhindert, während die Vorrichtungen einer reinen Zug-Druck-Belastung unterliegen.

2. System zum Aufbringen von Biegelasten auf eine Drehwelle nach Anspruch 1, **dadurch gekennzeichnet, dass** der zentrale Körper (6) insbesondere aus Stahl hergestellt ist.

3. System zum Aufbringen von Biegelasten auf eine Drehwelle nach Anspruch 1, **dadurch gekennzeichnet, dass** die Lager (5) insbesondere Kegelrollenlager sind.

## Claims

1. A system for applying bending loads to a rotary shaft, **characterised in that**, according to the latter, it has:
a) a hydraulic actuator (1), which introduces the load;
b) a load cell (2) joint to the hydraulic actuator (1) rod (12);
c) a fork (3) joint to the load cell (2), which divides the force of the hydraulic actuator (1) on two arms (3a), (3b) and transmits it to;
d) two ball joints (4), which absorb the deformation of a main shaft (7) when it bends; these ball joints (4) being mounted to two transfer shafts (61), which pass;
e) a central body (6), through which the load coming from the ball joints is transmitted to;
f) two bearings (5), inserted into the central body (6), which accept a high load value and rotation speed in the main shaft;
in such a way that the main rotary shaft (7), mounted to the central body (6), bends given the incoming load through the load chain formed by the hydraulic actuator (1) / load cell (2) / fork (3) and the coming together of the bearings (5) /ball joints (4) prevents bending moments, whilst the devices are subjected to a pure tension-compression load.

2. The system for applying bending loads to a rotary shaft according to claim 1, **characterised in that** the central body (6) is specifically made of steel.

3. The system for applying bending loads to a rotary shaft according to claim 1, **characterised in that** the bearings (5) are specifically conical roller bearings.
